# FASCICULE DE BREVET EUROPEEN

(11) **EP 0 502 900 B1**
(45) Date de publication et mention de la délivrance du brevet: **11.09.1996**
(21) Numéro de dépôt: 90917450.0
(22) Date de dépôt: 20.11.1990
(51) Int. Cl.: C08K 7/02, B29C 70/00, B29B 15/10, C22C 32/00

(54) **PREPARATION DE MATERIAUX COMPOSITES FRITTES**
HERSTELLUNG VON SINTERVERBUNDWERKSTOFFEN
PREPARATION OF SINTERED COMPOSITE MATERIALS

(30) Priorité: 27.11.1989 FR 8915583
(43) Date de publication de la demande: 16.09.1992
(73) Titulaire: MATERIALS TECHNICS, 1631 Luxembourg (LU)
(72) Inventeur: BERGER, Michel 104, la Lande, F-33480 Castelnau-de-Médoc (FR)
(74) Mandataire: Portal, Gérard
(86) Numéro de dépôt international: FR9000829
(87) Numéro de publication internationale: WO9108256

(56) Documents cités:
- EP-A- 0 179 688
- DE-A- 2 019 766
- DE-A- 2 415 730

## Description

L'invention concerne un nouveau procédé de fabrication de matériaux composites de base destinés à la fabrication de matériaux frittés renforcés de fibres longues, un procédé de fabrication de tels matériaux composites frittés et l'utilisation de ce procédé pour la fabrication de produits composites frittés de haute technologie destinés notamment à l'aérospatiale ou aux véhicules à grande vitesse, tels que TGV.

On connaît depuis de nombreuses années de multiples matériaux composites comprenant une matrice, notamment de type céramique ou polymérique , renforcés d'éléments de renforcement, par exemple sous la forme de fibres. Les problèmes techniques rencontrés dans les matériaux composites concernent essentiellement l'adhésion de la matrice aux éléments de renforcement, en général des fibres. Divers procédés ont été proposés pour améliorer cette adhésion grâce à des traitements particuliers des éléments de renforcement (voir EP-B-0179688).

On a cherché à améliorer l'homogénéité de sous-produits à matrice thermoplastique renforcés destinés à être moulés en presse pour donner des composites ayant une propriété de surface et des qualités mécaniques améliorées. Un tel procédé faisant appel à un contrôle particulier du fonctionnement d'une vis est décrit dans le brevet US 4 897 233.

On connaît également des matériaux à matrice composée d'un polymère et d'une matière frittable en particulier métallique et on a cherché en particulier à améliorer la cohésion du sous-produit à l'état cru, c'est-à-dire non encore fritté : la solution proposée par le brevet français 2 044 739 consiste à utiliser comme polymère un polymère organique susceptible de former des fibrilles.

De nombreux perfectionnements peuvent encore être apportés aux matériaux composites, notamment en ce qui concerne leur capacité d'écoulement des charges électrostatiques, concernant leur température d'inflammabilité, sans dégagement de gaz toxiques, et concernant leurs qualités physiques et mécaniques.

La présente invention a donc pour but principal de fournir un nouveau procédé de fabrication de matériau composites présentant une bonne ou une excellente capacité d'écoulement des charges électrostatiques, une température d'inflammabilité élevée de préférence au moins égale à 900°C ou même 1 000°C, ainsi que des propriétés physiques et mécaniques élevées, notamment une très bonne dureté, une résistance à la flexibilité/rupture, une résistance excellente aux délaminages.

La présente invention a pour but de résoudre le nouveau problème technique énoncé ci-dessus à l'aide d'une solution particulièrement simple, d'une grande souplesse d'emploi, qui permet de régler la composition des matériaux composites en fonction d'innombrables applications industrielles, en particulier dans le cadre de la fabrication ce produits de haute technologie destinée notamment à l'aéronautique, l'aérospatiale ou les véhicules à grande vitesse, tels que TGV, ou dans l'automobile, ou les produits ininflammables.

La présente invention résout pour la première fois les problèmes techniques énoncés ci-dessus d'une manière simultanée, simple, relativement peu coûteuse, utilisable à l'échelle industrielle.

Selon une caractéristique essentielle, l'invention concerne un procédé de fabrication d'un matériau de base destiné à la fabrication de matériaux composites frittés à matrice composite renforcés de fibres longues, caractérisé en ce qu'il comprend les étapes successives suivantes :
a) on prévoit une chambre de traitement électrostatique capable de réaliser un traitement électrostatique en courant continu haute tension et/ou en courant alternatif haute tension ;
b) on introduit dans ladite chambre de traitement électrostatique un mélange contenant une poudre de matériau en polymère organique et/ou une poudre de matériau minéral, de type céramique, et une poudre de matériau métallique ;
c) on procède à un traitement électrostatique de ces poudres ainsi introduites dans ladite chambre de traitement électrostatique, de préférence comprenant tout d'abord un traitement électrostatique de préférence sous haute tension en courant continu pendant une période de temps suffisante pour charger électrostatiquement les particules de poudre de matériau organique et/ou minéral de type céramique et de matériau métallique, suivi d'un traitement électrostatique de préférence sous haute tension en courant alternatif pendant un temps suffisant pour provoquer un mélange homogène des poudres par l'agitation créée par le champ alternatif;
d) on récupère le mélange de poudres homogénéisé ainsi obtenu ;
e) dans une zone de fabrication du matériau composite, on introduit des fibres de renforcement, en particulier sous forme de tissé, que l'on saupoudre du mélange homogène de poudres précédemment obtenu, éventuellement en procédant à l'empilage de plusieurs couches successives également successivement saupoudrées du mélange homogène de poudres précédemment obtenu ;
f) on procède à un nouveau traitement électrostatique en courant alternatif de préférence sous haute tension pendant une période de temps suffisante pour que l'agitation des particules du mélange homogène pénètre intimement dans le réseau fibreux ;

Ainsi, selon un premier aspect, la présente invention fournit un matériau composite complexe de base destiné à la préparation d'un matériau composite fritté comprenant une matrice et des fibres de renforcement, caractérisé en ce que ladite matrice est formée à partir d'une combinaison d'un matériau métallique, d'un matériau organique et/ou d'un matériau céramique intimement mélangés. Ces fibres de renforcement sont avantageusement des fibres longues, c'est-à-dire des fibres qui ont une longueur significative par rapport à la dimension du produit, plus précisément des fibres qui ont au moins 30nm et sont soit unidirectionnelles soit tissées.

Selon une première variante de réalisation de l'invention, la matrice du matériau composite est composée d'un matériau métallique et d'un matériau organique initialement sous forme de poudre, puis le matériau es traité thermiquement pour obtenir un frittage de la poudre métallique et une fusion de la poudre organique.

Selon une deuxième variante de réalisation de l'invention, la matrice du matériau composite est composée d'un matériau métallique et d'un matériau minéral de type céramique sous forme de poudre.

Selon une troisième variante de réalisation de l'invention, la matrice du matériau composite est composée d'un matériau métallique, d'un matériau polymérique organique et d'un matériau minéral de type céramique, ces trois matériaux étant sous forme de poudre.

Selon une autre caractéristique particulière de l'invention, la poudre du matériau organique, la poudre du matériau minéral et la poudre du matériau métallique ont une granulométrie voisine, de manière à améliorer l'homogénéité du mélange.

Selon une caractéristique avantageuse de l'invention, le matériau composite est caractérisé en ce que la granulométrie moyenne du matériau organique et/ou du matériau métallique est inférieure à environ 500 µm, avantageusement inférieure à environ 100 µm et peut être comprise entre 0,1 µm et 100 µm. Les poudres de matériau minéral ont habituellement une granulométrie comprise entre 30 et 120 µm. De préférence, le matériau minéral est choisi parmi les oxydes métalliques donnant naissance à un matériau céramique après frittage, en particulier l'oxyde d'aluminium, l'oxyde de zirconium, l'oxyde de magnésium, l'oxyde de lithium ou leurs mélanges en toutes proportions.

Selon une autre variante de l'invention, le matériau composite est caractérisé en ce que le matériau métallique est choisi parmi le groupe consistant des métaux de faible densité frittables, en particulier ceux habituellement utilisés dans le domaine aéronautique, aérospatial ou des véhicules à grande vitesse, en particulier l'aluminium, le magnésium, le lithium, ou des métaux lourds frittables, dont le point de frittage est de préférence voisin du point de fusion du matériau organique utilisé pour réaliser la matrice, en particulier le zinc, l'étain, le cuivre et leurs divers alliages, notamment le laiton.

Selon une variante de réalisation, le produit organique et le produit métallique sont choisis de façon que la fusion du produit organique se produise à une température inférieure à celle du frittage du produit métallique. C'est en particulier ce qui se passe lorsque l'on choisit des matériaux métalliques dont le point de frittage est particulièrement élevé, par exemple le nickel, le carbure de tungstène.

Selon une variante particulière de l'invention, le matériau organique utilisé est un matériau organique thermoplastique, ayant un point de fusion inférieur à 400°C. par exemple les polyamides, et en particulier les polyamides polysulfures.

Selon une autre variante de réalisation particulière de l'invention, le matériau organique est un matériau organique thermodurcissable, en particulier une résine du type époxyde.

Selon l'invention, il est possible de mélanger le matériau organique et/ou le matériau minéral de type céramique et le matériau métallique en toutes proportions selon le type de produit final recherché, réalisé avec le matériau composite, dans le cadre des applications préférées pour la fabrication de produits haute technologie, en particulier dans le domaine de l'aérospatiale, l'aéronautique, ou les véhicules à grande vitesse, tels que TGV, ou dans l'automobile, ou des produits ininflammables. Une proportion avantageuse relative en poids en matériau organique, et/ou en matériau minéral de type céramique, et en matériau métallique, est comprise entre 40/60 et 60/40.

Par ailleurs, également, la proportion en poids des fibres de renforcement peut varier dans des limites extrêmement larges en fonction des produits que l'on veut réaliser à partir de ces matériaux composites. Cette proportion de fibres de renforcement peut être comprise entre environ 5 % et environ 60 %, et de préférence entre environ 10 % et environ 50 %, ou encore de préférence entre environ 20 et environ 50 %, par rapport au poids total du matériau composite.

Selon une variante de réalisation particulière de l'invention, à titre de fibres longues de renforcement, on utilise des fibres de renforcement de haute qualité, en particulier des fibres ce renforcement organiques ou minérales obtenues à partir de carbone, verre, aramide, carbure de silicium, et notamment celles se présentant sous forme de réseaux fibreux, notamment sous forme monodirectionnelle, bidirectionnelle, tridirectionnelle, bouclée ou tissée.

Selon une variante de réalisation avantageuse, les fibres de renforcement sont les fibres de carbone et la matrice est formée à partir de poudres ce polyamide polysulfure, ainsi que d'une poudre d'aluminium ou de zinc, la granulométrie moyenne ces grains de ces poudres étant d'environ 20 µm, la proportion relative étant comprise entre 40-60/60-40 en pourcentage en poids, cette matrice étant cbtenue après un frittage ayant conduit à une fusion de la matrice organique, car exemple à environ 330°C, les fibres de renforcement constituant environ 40 % en poids du matériau composite total.

Selon un deuxième aspect, l'invention concerne l'utilisation du procédé de fabrication des matériaux de base décrits précédemment pour la fabrication de produits composites frittés utilisables dans le domaine de l'aéronautique, l'aérospatiale, ou les véhicules tels que TGV, ou dans l'automobile, ou des produits ininflammables.

L'invention concerne également un procédé de fabrication d'un matériau composite renforcé de fibres longues, caractérisé en ce qu'il consiste à préparer un matériau de base en utilisant le procédé décrit précédemment et à réaliser en outre une étape g destinée à :
- fritter le matériau métallique,
- ou à fondre le polymère et fritter le matériau métallique, simultanément ou dans une étape ultérieure.

Avantageusement, si le polymère a un point de fusion voisin du point de frittage du métal, le traitement de l'étape g) sera réalisé en une seule étape de traitement classique thermique sous pression.

Dans une autre caractéristique du procédé selon l'invention, le traitement de fusion du polymère sera dissocié du traitement destiné au frittage du métal. Ceci est particulièrement avantageux pour améliorer la cohésion du sous-produit avant l'opération de frittage du métal. Dans cette variante, le polymère pourra éventuellement être détruit au cours de l'ooération de frittage du métal et servira alors seulement de liant intermédiaire.

Selon une variante avantageuse du procédé, celui-ci est caractérisé en ce que le traitement électrostatioue en courant continu haute tension est réalisé sous une tension comprise entre environ 50 000 et environ 100 000 V.

Selon une autre variante de réalisation du procédé selon l'invention, celui-ci est caractérisé en ce que le traitement électrostatique en courant alternatif est réalisé sous une tension élevée comprise entre environ 25 000 et environ 30 000 V.

Ces traitements sont réalisés en général pendant un temps suffisant, habituellement de quelques minutes, pour aboutir aux effets techniques précédemment énoncés.

Enfin, l'invention couvre également l'utilisation des matériaux composites précédemment décrits ou tels que préparés par le procédé ci-dessus énoncé pour la fabrication de produits composites pour une application haute technologie, en particulier dans le domaine de l'aéronautique, l'aérospatiale, ou les véhicules grande vitesse, tels que TGV, ou dans l'automobile, ou des produits ininflammables.

Les matériaux composites frittés selon l'invention permettent de repousser la température d'inflammabilité des matériaux composites à des niveaux jamais atteints, ce qui constitue un avantage technique inattendu, déterminant, offrant des possibilités d'emploi dans tous les domaines.

Par ailleurs, les matériaux composites frittés selon l'invention présentent des qualités physiques et mécaniques extraordinairement améliorées par rapport aux matrices composites classiques et ont une capacité d'écoulement des charges remarquablement améliorée.

En outre, les matériaux composites frittés selon l'invention, et dans lesquels le matériau polymérique subsiste après frittage, présentent les avantages combinés des matériaux métalliques, ainsi que des matériaux composites organiques, thermoplastiques ou thermodurcissables.

Comme exemple de matériau organique thermoplastique, on citera les polyamides, en particulier les polyamides polysulfures, le polyamide 6-6, le propylène, comme matériau thermodurcissables, on citera en particulier la résine époxy, la bismaléimide.

### EXEMPLE 1

On prépare un matériau composite particulièrement destiné à constituer un bord d'attaque d'aile d'avion qui requiert les caractéristiques suivantes :
- très bonne dureté,
- résistance à la flexibilité/rupture d'au moins 1 400 MPa,
- capacité d'écoulement des charges électrostatiques en cas d'orage.

Pour ce faire, on utilise comme fibres de renforcement des fibres de carbone haute performance, sous forme de tissé ayant par exemple environ 70 % en poids de fibres dans le sens de la chaîne et environ 30 % en poids de fibres dans le sens de la trame, la chaîne définissant le profil ;
- ces fibres de renforcement représentent environ 40 % du poids total du matériau composite ;
- les 60 % restants sont constitués par une matrice comprenant :
   a) 30 % en poids par rapport au poids total du matériau composite d'une poudre de matériau organique constitué par du polyamide polysulfure ayant une granulométrie d'environ 20 µm disponible dans le commerce notamment chez Solvay ;
   b) 30 % en poids d'une poudre de matériau métallique constituée d'une poudre d'aluminium ayant une granulométrie moyenne d'environ 20 µm disponible dans le commerce notamment chez Péchiney.

Ce matériau composite est préparé de la manière suivante :

On procède tout d'abord à l'introduction du matériau poudreux d'aluminium et de polyamide polysulfure dans une chambre de traitement électrostatique où ce mélange de poudre est soumis tout d'abord à un traitement électrostatique en courant continu haute tension d'environ 70 000 V, pendant environ 2 min, de manière à charger électrostatiquement les grains de poudre des deux matériaux, puis à un traitement électrostatique haute tension en courant alternatif à une tension d'environ 25 000 V pendant environ 5 min, de manière à provoquer un mélange intime des poudres grâce à la grande agitation particulaire résultant du courant alternatif du champ.

On récupère le mélange intime ainsi obtenu et, dans cette chambre de traitement électrostatique, ou dans une autre chambre de traitement électrostatique, on introduit les fibres de renforcement, de préférence déjà traitées par un procédé de traitement électrostatique, tel que décrit dans le document FR-A-84 14 800 (n° de publication 2570646) de manière à dilater ou gonfler le tissu de fibres et à mordancer la surface des fibres, on saupoudre ce tissu de fibres avec le mélange de poudres précédemment obtenu.

Dans une variante de réalisation, on peut procéder à un empilage successif de plusieurs couches de tissé de fibres de matériau de renforcement, selon l'épaisseur désirée pour le matériau composite, par exemple six couches, tout en saupoudrant de mélange intime de poudre précédemment obtenu entre chaque couche.

On procède ensuite à un traitement électrostatique haute tension en courant alternatif à une tension d'environ 30 000 V pour provoquer un mélange intime et une pénétration provoquée du mélange de poudres intimement dans le réseau de fibres qui sont ainsi présentes de manière homogène au coeur de l'ensemble des fibres.

Enfin, on procède à un traitement thermique sous pression élevée, classique pour provoquer un frittage du composant métallique et une fusion de la matrice organique, ici des polyamides polysulfures. Ce traitement thermique peut par exemple être réalisé à environ 330°C, sous une pression d'environ 60 kg/cm².

On obtient ainsi un matériau composite répondant aux caractéristiques techniques multiples exigées pour l'emploi dans l'aéronautique ou l'aérospatiale.

Il a été observé que ce matériau composite présente une résistance nettement améliorée à l'inflammabilité, sa température d'inflammabilité est repoussée à au moins 900°C. En outre, il présente une capacité parfaite d'écoulement des charges électrostatiques.

### EXEMPLE 2

On prépare un matériau composite comme décrit dans l'exemple 1, mais avec l'emploi de 30 % en poids de poudre de zinc en lieu et place de la poudre d'aluminium employée à l'exemple 1, dans les mêmes proportions de granulométrie.

On obtient un matériau composite présentant également des caractéristiques exceptionnelles pouvant être utilisées pour les véhicules de grande vitesse, tels que TGV. Ce matériau composite a une caractéristique exceptionnelle d'évacuation des courants électrostatiques, ne dégage pas de gaz lors d'une inflammation et présente une température d'inflammabilité très élevée, supérieure à 1 000°C.

### EXEMPLES 3a et 3b

On prépare un matériau comprenant 40 % de fibre de carbone unidirectionnelle, 30 % de poudre de plomb et 30 % de poudre de polymère organique en utilisant le procédé décrit dans l'exemple 1 pour mélanger intimement les poudres puis dilater et mordancer les fibres, puis on réalise la fusion du polymère et le frittage du métal.

3-a Le polymère est constitué de polyamide 6-6 dont le point de fusion est compris entre 300 et 320°C.

3-b Le polymère est obtenu à partir de bismaléimide dont Le point de polymérisation est compris aux environs de 300-340°C.

### EXEMPLE 4

On procède comme dans l'exemple 3a ou 3b en remplaçant les fibres de carbone par des fibres de graphite.

### EXEMPLE 5

On procède comme dans l'exemple 3 ou 4 mais en remplaçant les fibres unidirectionnelles par des fibres tissées de carbone ou de graphite.

### EXEMPLE 6

On procède comme dans les exemples précédents en utilisant des fibres de carbure de silicium unidirectionnelles ou tissées représentant 40 % en poids, le mélange de poudre est constitué de poudre de nickel et de polypropylène en quantité égale.

Le frittage est réalisé aux environs de 1 400°C pendant 20 s.

Le polymère est détruit pendant l'opération de frittage et on obtient un ensemble fritté métal-fibres de très haute qualité technique.

### EXEMPLE 7

On procède comme dans l'exemple 6 en remplaçant la poudre thermoplastique par une résine époxy. On obtient comme dans l'exemple 6 un composite fritté métal-fibres.

### EXEMPLE 8

On réalise les mêmes traitements électrostatiques des poudres et des fibres que dans les exemples précédents en utilisant en poids 40 % de fibre de bore unidirectionnelle, 30 % de carbure de tungstène (dont la température de frittage est aux environs de 280°C en 60 s environ) et 30 % de poudre d'oxyde de zirconium dont le point de frittage est compris entre 2 700 et 2 800°C.

On réalise le frittage en atmosphère réductrice aux environs de 2 800°C.

## Revendications

1. Procédé de fabrication d'un matériau de base destiné à la fabrication de matériaux composites frittés à matrice composite renforcés de fibres longues, caractérisé en ce qu'il comprend les étapes successives suivantes :
a) on prévoit une chambre de traitement électrostatique capable de réaliser un traitement électrostatique en courant continu haute tension et/ou en courant alternatif haute tension ;
b) on introduit dans ladite chambre de traitement électrostatique un mélange contenant une poudre de matériau en polymère organique et/ou une poudre de matériau minéral de type céramique et une poudre de matériau métallique ;
c) on procède à un traitement électrostatique de ces poudres ainsi introduites dans ladite chambre ce traitement électrostatique, de préférence comprenant tout d'abord un traitement électrostatique de préférence sous haute tension en courant continu pendant une période de temps suffisante pour charger électrostatiquement les particules de poudre de matériau organique et/ou minéral de type céramique et de matériau métallique, suivi d'un traitement électrostatique de préférence sous haute tension en courant alternatif pendant un temps suffisant pour provoquer un mélange homogène des poucres par l'agitation créée par le champ alternatif ;
d) on récupère le mélange de poudres homogénéisé ainsi obtenu ;
e) dans une zone de fabrication du matériau composite, on introduit des fibres de renforcement, en particulier sous forme de tissé, que l'on saupoudre du mélange homogène de poudres précédemment obtenu, éventuellement en procédant à l'empilage de plusieurs couches successives également successivement saupoudrées du mélange homogène de poudres précédemment obtenu ;
f) on procède à un nouveau traitement électrostatique en courant alternatif de préférence sous haute tension pendant une période de temps suffisante pour Que l'agitation des particules du mélange homogène pénètre intimement dans le réseau fibreux ;

2. Procédé selon la revendication 1, caractérisé en ce que les fibres de renforcement introduites lors de l'étape (e) ont été préalablement soumises à un traitement électrostatique destiné à dilater ou gonfler le faisceau de fibres et à mordancer la surface dedites fibres.

3. Procédé selon la revendication 1 ou 2, caractérisé en ce que le traitement électrostatique en courant continu haute tension est réalisé sous une tension comprise entre environ 50 000 et environ 100 000 V.

4. Procédé selon la revendication 1 ou 2, caractérisé en ce que le traitement électrostatique précité en courant alternatif est réalisé sous une tension élevée comprise entre environ 25 000 et environ 30 000 V.

5. Procédé selon l'une des revendications 1 à 4, caractérisé en ce que la poudre du matériau organique et la poudre du matériau métallique ont une granulométrie voisine, de manière à améliorer l'homogénéité du mélange.

6. Procédé selon l'une des revendications 1 à 5, caractérisé en ce que la granulométrie moyenne du matériau organique et/ou du matériau métallique est inférieure à environ 500 µm, avantageusement inférieure à environ 100 µm et peut être comprise entre 0,1 et 100 µm.

7. Procédé selon l'une des revendications 1 à 6, caractérisé en ce que le matériau minéral est choisi parmi les oxydes métalliques donnant naissance à un matériau céramique après frittage, en particulier l'oxyde d'aluminium, l'oxyde de zirconium, l'oxyde de magnésium, l'oxyde de lithium, ou leurs mélanges en toutes proportions.

8. Procédé selon l'une quelconque des revendications 1 à 7, caractérisé en ce que le matériau métallique est choisi parmi le groupe consistant des métaux de faible densité frittables, en particulier, l'aluminium, le magnésium, le lithium, ou des métaux lourds frittables, dont le point de frittage est de préférence voisin du point de fusion du matériau organique utilisé pour réaliser la matrice, en particulier le zinc, l'étain, le cuivre, et leurs divers alliages, notamment le laiton.

9. Procédé selon l'une des revendications 1 à 8, caractérisé en ce que le matériau organique est un matériau organique thermoplastique.

10. Procédé selon l'une des revendications 1 à 8, caractérisé en ce que le matériau organique est un matériau organique thermodurcissable.

11. Procédé selon l'une des revendications 1 à 10, caractérisé en ce que la proportion relative en poids de matériau organique et/ou minéral de type céramique par rapport au matériau métallique est comprise entre 40/60 et 60/40.

12. Procédé selon l'une des revendications 1 à 11, caractérisé en ce qu'à titre de fibres longues ce renforcement, on utilise des fibres de renforcement organiques ou minérales obtenues à partir de carbone, verre, aramide, carbure de silicium, et notamment celles se présentant sous forme de réseau fibreux.

13. Procédé selon l'une des revendications 1 à 12, caractérisé en ce que les fibres de renforcement sont des fibres de carbone et le mélange de poudre est formé à partir de poudre de polyamide polysulfure, ainsi que d'une poudre d'aluminium ou de zinc, la granulométrie moyenne des grains de ces poudres étant d'environ 20 µm, la proportion relative des poudres étant comprise entre 40-60/60-40 en pourcentage en poids.

14. Utilisation du procédé selon l'une des revendications 1 à 13, pour la fabrication de produits composites frittés utilisables dans le domaine de l'aéronautique, l'aérospatiale, ou les véhicules tels que TGV, ou dans l'automobile, ou des produits ininflammables.

15. Procédé de fabrication d'un matériau composite fritté à matrice composite renforcé de fibres longues, caractérisé en ce qu'il consiste à préparer un matériau de base en utilisant le procédé selon l'une des revendications 1 à 13 et à réaliser en outre une étape g destinée à :
- fritter le matériau métallique,
- ou à fondre le polymère et fritter le matériau métallique,simultanément ou dans une étape ultérieure.

## Patentansprüche

1. Verfahren zur Herstellung eines Grundwerkstoffs für die Herstellung von Sinterverbundwerkstoffen mit einer Verbund-Matrix, die durch lange Fasern verstärkt ist, dadurch gekennzeichnet, daß es die folgenden aufeinanderfolgenden Stufen umfaßt:
a) man verwendet eine elektrostatische Behandlungskammer, in der eine elektrostatische Behandlung bei einem Hochspannungs-Gleichstrom und/oder einem Hochspannungs-Wechselstrom durchgeführt werden kann;
b) in die genannte elektrostatische Behandlungskammer führt man eine Mischung ein, die ein Pulver aus einem organischen Polymermaterial und/oder ein Pulver aus einem mineralischen Material vom Keramik-Typ und ein Pulver aus einem metallischen Material enthält;
c) man unterwirft die auf diese Weise in die genannte elektrostatische Behandlungskammer eingeführten Pulver einer elektrostatischen Behandlung, die vorzugsweise umfaßt zunächst eine elektrostatische Behandlung, vorzugsweise mit Gleichstrom unter hoher Spannung während einer Zeitspanne, die ausreicht, um die Pulverteilchen aus dem organischen Material und/oder aus dem mineralischen Material vom Keramik-Typ und aus dem metallischen Material elektrostatisch aufzuladen, woran sich eine elektrostatische Behandlung vorzugsweise mit Wechselstrom bei hoher Spannung während einer Zeitspanne anschließt, die ausreicht, um eine homogene Durchmischung der Pulver unter dem Einfluß der durch das Wechselfeld erzeugten Rührwirkung zu erzielen;
d) man trennt die so erhaltene homogenisierte Pulvermischung ab;
e) man führt in eine Zone zur Herstellung des Verbundwerkstoffs Verstärkungsfasern ein, insbesondere in Form eines Gewebes, die man mit der oben erhaltenen homogenen Pulvermischung bestreut (bestäubt), wobei man gegebenenfalls mehrere Schichten aufeinanderstapelt, die ebenfalls nacheinander mit der oben erhaltenen homogenen Pulvermischung bestreut (bestäubt) werden; und
f) man führt eine erneute elektrostatische Behandlung mit Wechselstrom vorzugsweise unter hoher Spannung durch während einer Zeitspanne, die ausreicht um zu bewirken, daß die Teilchen der homogenen Mischung aufgrund ihrer Bewegung tief in das Fasergeflecht eindringen.

2. Verfahren nach Anspruch 1, dadurch gekennzeichnet, daß die in der Stufe (e) eingeführten Verstärkungsfasern vorher einer elektrostatischen Behandlung unterworfen worden sind, um das Faserbündel zu expandieren oder aufzublähen und um die Oberfläche der Fasern zu beizen.

3. Verfahren nach Anspruch 1 oder 2, dadurch gekennzeichnet, daß die elektrostatische Behandlung mit Hochspannungs-Gleichstrom unter einer Spannung zwischen etwa 50 000 und etwa 100 000 V durchgeführt wird.

4. Verfahren nach Anspruch 1 oder 2, dadurch gekennzeichnet, daß die genannte elektrostatische Behandlung mit Wechselstrom unter einer erhöhten Spannung zwischen etwa 25 000 und etwa 30 000 V durchgeführt wird.

5. Verfahren nach einem der Ansprüche 1 bis 4, dadurch gekennzeichnet, daß das organische Material-Pulver und das metallische Material-Pulver eine ähnliche Teilchengröße haben, um die Homogenität der Mischung zu verbessern.

6. Verfahren nach einem der Ansprüche 1 bis 5, dadurch gekennzeichnet, daß die mittlere Teilchengröße des organischen Materials und/oder des metallischen Materials unterhalb etwa 500 um, zweckmäßig unterhalb etwa 100 µm, liegt und zwischen 0,1 und 100 µm liegen kann.

7. Verfahren nach einem der Ansprüche 1 bis 6, dadurch gekennzeichnet, daß das mineralische Material ausgewählt wird aus den Metalloxiden, die nach dem Sintern ein Keramikmaterial ergeben, insbesondere aus Aluminiumoxid, Zirkoniumoxid, Magnesiumoxid, Lithiumoxid oder ihren Mischungen in allen Mengenverhältnissen.

8. Verfahren nach einem der Ansprüche 1 bis 7, dadurch gekennzeichnet, daß das metallische Material ausgewählt wird aus der Gruppe, die besteht aus Sintermetallen mit geringer Dichte, insbesondere aus Aluminium, Magnesium, Lithium, oder Sinter-Schwermetallen, deren Sintertemperatur vorzugsweise nahe beim Schmelzpunkt des für die Herstellung der Matrix verwendeten organischen Materials liegt, insbesondere Zink, Zinn, Kupfer und ihre verschiedenen Legierungen, speziell Messing.

9. Verfahren nach einem der Ansprüche 1 bis 8, dadurch gekennzeichnet, daß das organische Material ein thermoelastisches organisches Material ist.

10. Verfahren nach einem der Ansprüche 1 bis 8, dadurch gekennzeichnet, daß das organische Material ein duroplastisches (wärmehärtbares) organisches Material ist.

11. Verfahren nach einem der Ansprüche 1 bis 10, dadurch gekennzeichnet, daß das Mengenverhältnis, bezogen auf das Gewicht, zwischen dem organischen Material und/oder dem Material vom Keramik-Typ und dem metallischen Material zwischen 40/60 und 60/40 liegt.

12. Verfahren nach einem der Ansprüche 1 bis 11, dadurch gekennzeichnet, daß als lange Verstärkungsfasern organische oder mineralische Verstärkungsfasern verwendet werden, die aus Kohlenstoff, Glas, Aramid, Siliciumcarbid hergestellt sind, und insbesondere solche verwendet werden, die in Form eines Fasergewebes vorliegen.

13. Verfahren nach einem der Ansprüche 1 bis 12, dadurch gekennzeichnet, daß die Verstärkungsfasern Kohlenstoff-Fasern sind und daß die Pulvermischung besteht aus einem Polyamidpolysulfidpulver sowie aus einem Aluminium- oder Zinkpulver, wobei die mittlere Korngröße der Körnchen dieser Pulver etwa 20 µm beträgt und das Mengenverhältnis der Pulver zueinander, angegeben in Gew.-%, (40 bis 60)/(60 bis 40) beträgt.

14. Anwendung des Verfahrens nach einem der Ansprüche 1 bis 13 zur Herstellung von Sinterverbundwerkstoff-Produkten, die auf dem Gebiet der Luftfahrt, der Raumfahrt oder der Fahrzeuge wie des TGV oder in einem Automobil verwendbar sind, oder zur Herstellung von nicht entflammbaren Produkten.

15. Verfahren zur Herstellung eines Sinterverbundwerkstoffes mit einer mit langen Fasern verstärkten Verbundwerkstoff-Matrix, dadurch gekennzeichnet, daß es darin besteht, einen Grundwerkstoff herzustellen unter Anwendung des Verfahrens nach einem der Ansprüche 1 bis 13 und außerdem eine Stufe (g) durchzuführen, die dazu dient:
- das metallische Material zu sintern oder
- das Polymer zum Schmelzen zu bringen und das metallische Material gleichzeitig oder in einer späteren Stufe zu sintern.

## Claims

1. Process for the manufacture of a basic material for the preparation of sintered composite materials reinforced with long fibers, characterized in that it comprises the following successive steps :
a) an electrostatic treatment chamber is provided which is capable of carrying out a high-voltage direct current and/or high voltage alternating current electrostatic treatment;
b) a mixture containing a powder of an organic polymeric material and/or a powder of an inorganic material of ceramic type and a powder of metallic type are introduced into said electrostatic treatment chamber;
c) an electrostatic treatment is carried out on these powders thus introduced into said electrostatic treatment chamber, said treatment preferably comprising firstly an electrostatic treatment, preferably with high-voltage direct current, for a sufficient period of time to electrostatically charge the particles of powder of the organic and/or inorganic ceramic type material and of metallic material, followed by an electrostatic treatment, preferably with high-voltage alternating current, for a sufficient time to cause homogenous mixing of the powders due to the agitation created by the alternating field;
d) the resulting homogenized powder mixture is recovered;
e) reinforcing fibers, in particular in the form of a woven fabric, are introduced into a zone for the manufacture of the composite material and are sprinkled with this previously obtained homogenous powder mixture, an optional procedure being to stack several successive layers, which are also successively sprinkled with the previously obtained homogenous powder mixture;
f) a further electrostatic treatment is carried out with alternating current, preferably under high voltage, for a sufficient period of time for the agitation of the particles of the homogenous mixture to penetrate intimately the network of fibers.

2. Process according to claim 1, characterized in that the reinforcing fibers introduced during step (e) have been undergoing, beforehand, an electrostatic treatment intended for causing the bundle of fibers to expand and to swell and for etching the surface of said fibers.

3. Process according to claim 1 or 2, characterized in that the electrostatic treatment with high-voltage direct current is carried out under a voltage of between about 50,000 and about 100,000 V.

4. Process according to claim 1 or 2, characterized in that said electrostatic treatment with alternating current is carried out under a high voltage of between about 25,000 and about 30,000 V.

5. Process according to one of claims 1 to 4, characterized in that the powder of the organic material and the powder of the metallic material have a similar particle size so as to improve the homogeneity of the mixture.

6. Process according to one of claims 1 to 5, characterized in that the average particle size of the organic material and/or the metallic material is less than about 500 µm and advantageously less than about 100 µm, and can be between 0.1 and 100 µm,

7. Process according to one of claims 1 to 6, characterized in that the inorganic material is selected from metal oxides which produce a ceramic material after sintering, in particular aluminium oxide, zirconium oxide, magnesium oxide, lithium oxide or mixtures thereof in all proportions.

8. Process according to any one of claims 1 to 7, characterized in that the metallic material is selected from the group consisting of sinterable low-density metals, in particular aluminium, magnesium and lithium, or sinterable heavy metals whose sintering temperature is preferably similar to the melting point of the organic material used to produce the matrix, in particular zinc, tin, copper and various alloys thereof, especially brass.

9. Process according to any one of claims 1 to 8, characterized in that the organic material is a thermoplastic organic material.

10. Process according to any one of claims 1 to 8, characterized in that the organic material is a thermosetting organic material.

11. Process according to one of claims 1 to 10, characterized in that the relative proportion by weight of organic material and/or inorganic material of ceramic type relative to the metallic material is between 40/60 and 60/40.

12. Process according to one of claims 1 to 11, characterized in that the long reinforcing fibers used are organic or inorganic fibers obtained from carbon, glass, aramide silicon carbide, and especially those in the form of a network of fibers.

13. Process according to one of claims 1 to 12, characterized in that the reinforcing fibers are carbon fibers and the powder mixture is formed from polyamide polysulfide powder and from an aluminium or zinc powder, the average size of the particles of these powders being about 20 µm, the relative proportion of the powders being 40-60/60-40 in percentage by weight.

14. Use of a process according to one of claims 1 to 13, for the manufacture of sintered composite products usable in the field of aeronautics, the aerospace sector or vehicles such as TGV, or in the automobile sector, or non-flammable products.

15. Process for the manufacture of a sintered composite material with a composite matrix and long fibers, characterized in that it consists in preparing a base material by using the process according to one of claims 1 to 13 and in further carrying out a step g intended for:
- sintering the metallic material,
- or in melting the polymer and sintering the metallic material simultaneously or in a subsequent step.
